# EUROPEAN PATENT APPLICATION

(11) **EP 1 256 751 A2**
(43) Date of publication of application: **13.11.2002**
(21) Application number: 02425096.1
(22) Date of filing: 22.02.2002
(51) Int. Cl.: F16K 31/40, F16K 41/12

(54) **Valve**

(30) Priority: 11.05.2001 IT MI010970
(71) Applicant: Sirai Elettromeccanica S.R.L., 20121 Milano (IT)
(72) Inventor: Sandrono, Bernardo, 10086 Rivarolo Canavese (Torino) (IT); Galli, Lorenzo, 20060 Bussero (Milano) (IT)
(74) Representative: Tansini, Elio Fabrizio

(57) **Abstract**

A valve comprises a valve body (2) extending along a longitudinal axis (2a) and having a side wall (2b), a delivery port (3), a discharge port (4) connectable to the delivery port (3), a closure element (5) movable from a closed position to an open position and interposed between the delivery port (3) and discharge port (4) and an actuating unit (6) active at least on the closure element (5) to move it; the delivery port (3) and discharge port (4) are oriented in mutually transverse, and preferably perpendicular, directions.

## Description

The present invention relates to a valve, preferably of the type known in the art as "solenoid valve".

It is known that solenoid valves are widely used in a great number of application fields (both from a domestic and an industrial point of view) and are particularly appreciated for control and management of liquid or gaseous flows.

Generally a solenoid valve consists of a valve body in which delivery and discharge orifices for the fluid that must pass through the valve (or must be shut off by it) are suitably formed and sized, which orifices in turn can be brought into communication with or separated from each other by a movable element (of varying nature, a sliding wall, a diaphragm or other, for example). This movable element is generally operated by excitation of a coil (or solenoid) through which current runs and which is coupled with a magnetic core; in this way a magnetic field is induced the mechanical effect of which is exactly that of moving the movable element itself to the open or closed positions.

In an alternative form of the type of solenoid valve briefly described above (known as "direct-operation solenoid valve") the movable element is provided not to be directly operated by the electromagnetic-movement apparatus. In this second valve typology, which on the other hand is as known and spread as the preceding one in many application fields, movement of the movable element is carried out due to the pressure difference taking place between the delivery duct and discharge duct of the valve itself. In more detail, in this type of valve (known as "indirect-operation solenoid valve"), a slider element directly driven by the electromagnetic-movement apparatus, is moved (depending on requirements) in such a manner that a drive chamber is brought into pneumatic or hydraulic communication with the delivery and/or discharge orifices. The drive chamber is then active on the movable element, and capable of moving it so as to open and/or close the valve by transmission of pressure (or negative pressure) that is created following movement of the slider element.

Depending on the provided uses and fluids, solenoid valves of known type have differentiated features from a structural and operating point of view: for instance, in bathroom and kitchen appliances or fixtures (in the following "sanitary appliances") for dwellings or premises for public use, solenoid valves are extensively employed to control the water flow from taps of sinks, lavatories and others.

In these cases the valves of known type are often integrally inserted in appropriate housing seats formed in the body of the sanitary appliance or the tap, being completely concealed to the users' sight; in addition, operation of same (by the users themselves) can be manual or controlled by automatic presence-sensors, such as photoelectric cells or ultra-sonic transceivers.

It is however to be noted that solenoid valves to be installed in sanitary appliances must meet strict requirements in terms of compactness and easy installation, taking into account their characteristic way of installation. In addition to these planning requirements, the valve in its closed configuration, when installed within the sanitary appliance, must be able to ensure a perfect wet seal between the delivery pipes and discharge pipes (so as to avoid annoying losses and/or dripping from the dispensing taps). It is also to be mentioned the fact that, in the design of solenoid valves to be inserted into sanitary appliances, it is of the greatest importance to ensure maximum simplicity and hydraulic efficiency of the connections between the valve and the inner pipes of the appliance so as to avoid (or at all events minimize) the negative effects due to water hammers, pressure pulsations and backwater in ducts.

It is finally to be pointed out, with reference to the design problems of the assembly consisting of the "sanitary appliance + valve" that the construction architecture of a solenoid valve is to be of such a nature that design and accomplishment of the inner pipes of the sanitary appliance must be simple in order to reduce work costs.

Among the great number of solutions found in this field, a particular typology of indirect-operation solenoid valve is known which mainly consists of a valve body of substantially cylindrical shape.

At the end of this valve body there is a bistable electromagnet driving a slider following the previously described modalities, whereas at the opposite end of the valve body delivery and discharge ports are formed which in turn are separated from each other, in the "closed-valve" configuration, by a movable element comprising an elastically deformable diaphragm.

In the above described valve, the delivery and discharge ports are such designed that the flow passing therethrough is oriented in parallel directions which however have opposite ways; in addition, these (inflow and outflow) directions are substantially in alignment with the longitudinal-extension axis of the valve itself.

In other words, in the above described valve of known type the delivery and discharge ports are coaxial with the valve body and concentric with respect to each other; furthermore, this valve has an engagement screw thread formed on the side wall of the valve body and disposed concentric and coaxial with the delivery and discharge ports as well.

The known art briefly described above however has some limits, also in relation to the particular just disclosed valve typology.

In fact, in valves of known type, due to arrangement and orientation of the delivery and discharge ports, often use of pipes of a conformation which is complicated or unsuitable to be held within a sanitary appliance (or even only a tap) becomes compulsory. This problem also arises to a non negligible extent in the case of a valve having coaxial and concentric delivery and discharge ports, since arrangement of a series of pipes within the appliance with a rather complicated form is required in order to ensure a correct operation of the appliance itself. (In fact, it is necessary for at least part of one of the two lines, i.e. the delivery or discharge line, to surround the other, but at the same time separation of the two flows, i.e. the one entering the valve and the one coming out of same, must be allowed).

Another drawback of valves of known type resides in that installation of the valve inside the sanitary appliance must be often carried out in a rather uncomfortable work environment (in terms of available space for operation and/or tool displacement); in addition, above all in the case of a valve with coaxial and concentric ports, high accuracy is required during definition of the valve housing seat; furthermore, the valve must be also centred in a precise manner with respect to the concentric pipes (if a dangerous jamming during mounting and/or water losses and leakages in operation are wished to be avoided).

In addition, in valves of known type water-tightness between the valve walls and the corresponding walls of the sanitary appliance is obtained through use of many sealing spring rings; excess of these sealing rings is due to the fact that the construction architecture of known valves does not enable the rings to be efficiently pressed (so as to optimise the closing effect due to the elastic reactions of the rings themselves). Still again, this problem is particularly felt in a valve with coaxial and concentric ports, in which the presence of a seal to be interposed between a circular wall defining one of the ports and the corresponding tubular wall of the sanitary appliance pipe is made necessary; it will be noted that this seal is not pressed during fitting of the valve in its seat, since it lies between two facing surfaces that practically are not pressed against each other, while the mounting screw thread is acted upon. (Said thread, as above specified, is concentric and coaxial with the delivery and discharge ports, so that said surfaces are substantially parallel to the fitting and screwing direction of the valve itself).

In short, another problem present in valves of known type is the impossibility of optimising the number and/or arrangement of the seals, in particular if given construction architectures are wished to be accomplished.

There is still another technical problem concerning valves of known type: if indirect-operation valves are to be obtained, arrangement of the pressure-transmitting ducts to and from the drive chamber is often complicated, both from a structural point of view and from the standpoint of the production methodology; obviously this adversely affects the manufacture times and the overall production and sale costs.

There are still further drawbacks of practical nature that can be widely found in valves of known type: importantly, the duration of life of these devices is subjected to many limitations due to possible clogging and/or wear of the movable parts. (This problem is particularly felt in valves equipped with movable elements consisting of a deformable diaphragm). In this connection it is also to be noted that it is often practically impossible to carry out a correct servicing or replacement of the parts on a valve of known type due to the difficulty encountered in separating the valve from the appliance and above all due to construction of the valve itself that generally makes it hard to accede to its inner parts.

Finally, in many solenoid valves of known type it is not possible, or at all events non practical to change the operating modalities of same, particularly with reference to the typology of the electromagnet therein used (which generally can be of the "monostable" or "bistable" type).

Under this situation, the technical task underlying the present invention is to devise a valve capable of substantially obviating the mentioned limits.

Mainly, it is an aim of the present invention to devise a valve enabling easy and quick installation in a sanitary appliance, without high centring accuracy and/or precision in making the housing seat being required.

Within the scope of this technical task it is an important aim of the invention to devise a valve enabling a good hydraulic efficiency to be obtained so as to avoid operation irregularities in the sanitary appliance; in addition, the present invention aims at conceiving a valve adapted to ensure a perfect tightness to water seepages (by an optimal arrangement of the seals).

The present invention also aims at conceiving a valve of simple construction while at the same type enabling quick and simple arrangement of the pipes forming the sanitary appliance in which the valve is to be installed, which, on the whole, will bring about simplicity in manufacture and setting up.

The valve of the invention must also be able to assure the above mentioned operating and structural characteristics while at the same time involving low production costs and high production rates.

In addition, a technical aim of the invention is to devise a valve that can be easily removed from the sanitary appliance on which it is mounted either for carrying out servicing of the inner parts as well or for replacing one or more components thereof; likewise, said valve must possess structural features of such a nature that operation through a monostable-magnet or a bistable-magnet can be indifferently adopted.

The technical tasks mentioned and the aims specified are substantially achieved by a valve having the features set out in one or more of the appended claims.

Description of a preferred, but not exclusive, embodiment of a valve in accordance with the invention will be now given with reference to the accompanying drawings, in which:
- Fig. 1 is a sectional side view of a valve in accordance with the present invention;
- Fig. 2 is a diagrammatic view of a sanitary appliance comprising the valve shown in Fig. 1;
- Fig. 3 is a sectional side view of another valve in accordance with the present invention; and
- Fig. 4 is a diagrammatic view of a sanitary appliance comprising the valve shown in Fig. 3.

With reference to the drawings, a valve in accordance with the invention is generally denoted by reference numeral 1.

Valve 1, that according to a particularly preferred embodiment of the present invention will be a "solenoid valve", substantially comprises a valve body 2 (to be made of different materials depending on the particular requirements) and substantially consisting of a prismatic (or cylindrical body still depending on requirements) extending along a longitudinal axis 2a.

The valve body 2 has a side wall 2b that can have any configuration; for instance, the side wall 2b can have a cylindrical surface substantially parallel to the longitudinal axis 2a.

In order to convey and duly intercept the fluid circulating in the appliance in which valve 1 is installed, a delivery port 3 and a discharge port 4 that are formed in the valve body 2, are present; conveniently the discharge port 4 and delivery port 3 are hydraulically and/or pneumatically connectable following modalities to be described later on.

A closure element 5 is then present and it is movably engaged in the valve body 2 and can move in a reversible manner between a closed position (at which it prevents passage of a fluid between the delivery port 3 and discharge port 4) and an open position (at which it enables fluid passage between the delivery 3 and discharge 4 ports). This closure element 5 is directly or indirectly moved by effect of an actuating unit 6 which is connected to the valve body 2 and is exactly active, (as described in more detail below) on the closure element 5 to move it in the desired way.

Advantageously, in the valve of the invention the delivery port 3 and discharge port 4 are oriented in mutually transverse directions which are preferably perpendicular to each other.

In other words, while one of the ports is substantially aligned in parallel relationship with axis 2a of the valve body 2, the other port is such disposed that it defines a direction of the incoming or outgoing flow which is transverse to the direction of the outgoing or incoming flow defined by said one port, respectively.

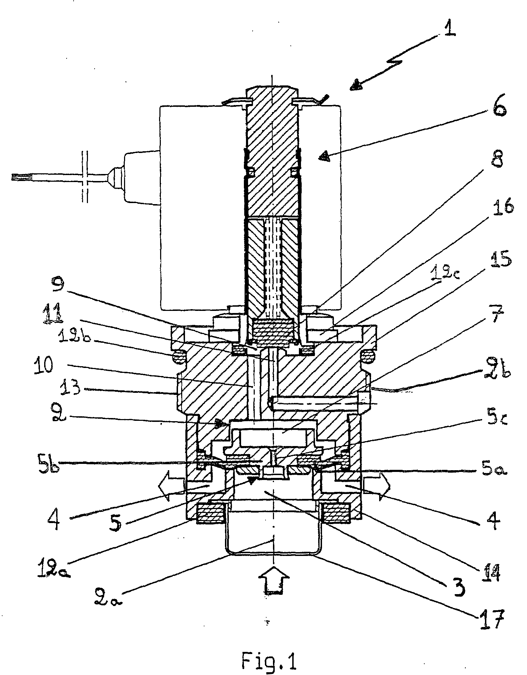

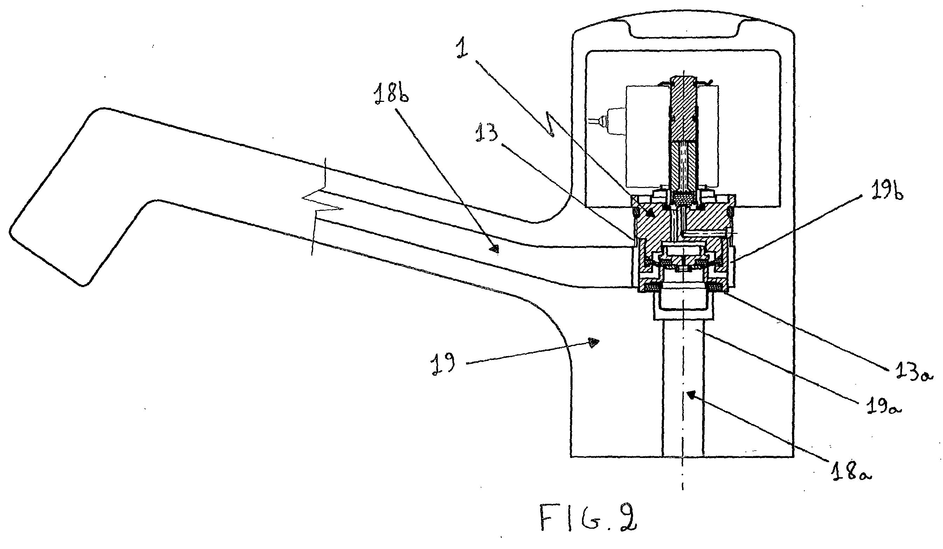

According to a first embodiment, shown in Figs. 1 and 2, the delivery port 3 is oriented parallel to, and more particularly coaxial with, the longitudinal axis 2a of the valve body 2, whereas the discharge port 4 which is formed in the side wall 2b of the valve body 2, is oriented perpendicular to the delivery port 3.

In other words, in the alternative embodiment of Fig. 1 the discharge port 4 defines an outflow direction lying in an ideal plane perpendicular to the longitudinal axis 2a of the valve body 2 (and is therefore substantially horizontal and at the same time radially diverges from axis 2a), whereas the delivery port 3 defines an inflow direction substantially coincident with the longitudinal axis (this direction being a substantially vertical direction); in order to further explain the particular geometry of the delivery and discharge ports, 3 and 4, of the valve herein disclosed, it is possible to say that substantially the discharge port 4 ideally defines a multiplicity of outflow axes radially diverging from the longitudinal axis 2a; conveniently these radial axes are contained in an ideal geometric plane which is normal to the axis 2a itself.

Advantageously, the discharge port 4 may consist of a single hole formed in the side wall 2b or it may comprise a given number of radial openings (for instance, in a particularly appreciable embodiment of the present invention sixteen radial openings may be provided which are formed in the side wall 2b and are angularly spaced apart the same distance from each other).

Still in accordance with the present invention, valve 1 can be made by orienting the discharge port 4 parallel to (and preferably coaxial with) the longitudinal axis 2a of the valve body 2, whereas the delivery port 3 can be formed in the side wall 2b and is oriented perpendicular to the discharge port 4.

According to this alternative embodiment, the delivery port 3 defines a substantially radial and converging inflow direction with respect to the longitudinal axis 2a of the valve body 2 (or better, a variety of radially converging inflow directions); at the same time, the discharge port defines an outflow direction substantially coincident with (or more generally parallel to) axis 2a.

In the same manner as already found in the first embodiment herein described, the delivery port 3 may comprise any given number of radial openings that can have any conformation depending on requirements.

In accordance with the present invention, operation of the closure member 5 can take place directly (i.e. it is possible to directly move the closure member 5 by the actuating unit 6 through appropriate kinematic connections); at all events, still within the present invention an "indirect-operation" valve can be conceived which is advantageously characterized by the particular relative arrangement of the delivery 3 and discharge 4 ports; illustrative examples of two typologies of these indirect-operation valves are reproduced in the accompanying figures.

Should an "indirect-operation" valve be adopted, the valve of the invention would further comprise a back pressure chamber 7 at least partly formed within the valve body 2 and adapted to be brought into fluid communication with the delivery port 3 and discharge port 4; the function of this back pressure chamber 7 is to set up a pressure difference, under appropriate operating conditions, between the two opposite faces of the closure member 5 so as to cause displacement of same (obviously in a reversible manner) between the closed and open positions.

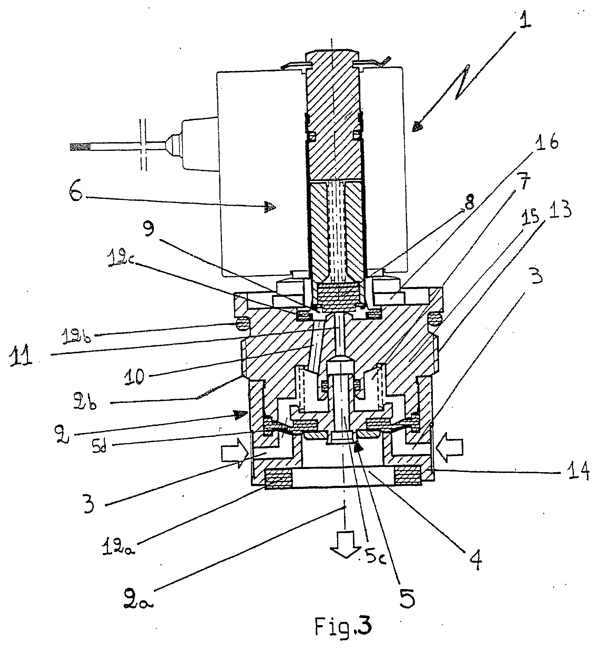

In association with the back pressure chamber 7 there is a slider element 8 which is operatively active on the back pressure chamber 7 itself and, as viewed from Figs. 1 and 3, can be moved by the actuating unit 6.

The slider element 8 can be moved in a reversible manner depending on the mechanical actions exerted thereon by the actuating unit 6, between a first operating condition (in which it inhibits fluid communication between the discharge port 4 and back pressure chamber 7) and a second operating condition (in which it enables fluid passage between the discharge port 4 and back pressure chamber 7).

A drive chamber 9 is also present and it is at least partly formed within the valve body 2 and houses the slider element 8; connected with this drive chamber 9 is a main intercommunication duct (connecting the back pressure chamber 7 to the drive chamber 9), and a secondary intercommunication duct 11 (connecting the drive chamber 9 to the discharge port 4).

It will be appreciated that, by virtue of the described structure, accomplishment of an indirect-operation valve contemplating a different combination of components is possible provided there is the presence of a back pressure chamber 7 active on the closure element 5 and connected as above described with the delivery 3 and discharge 4 ports; in the embodiments herein described and illustrated (see Figs. 1 and 3) the drive chamber 9 and intercommunication ducts 10 and 11 are necessary either to enable efficient transmission of the pressure signals detectable at the delivery and/or discharge ports, 3 and 4 respectively, to the back pressure chamber 7 (or to inhibit transmission of said signals thereto, depending on the condition of the slider element 8) and at the same time to suitably house the slider element 8 itself.

Obviously, if allowed or required, the intercommunication ducts 10 and 11 could be arranged so as to have different extensions and/or different sections with respect to those illustrated (and the shape and/or arrangement of the drive chamber 9 could be modified as well, or even eliminated), provided the appropriate hydraulic and/or pneumatic connection between the delivery port 3, discharge port 4 and back pressure chamber 7 can be conveniently established.

Advantageously, the structural and operating arrangement of the elements present in the indirect-operation valve is thought up in such a manner that the closure element 5 reaches the open position at the second operating condition of the slider element 8.

In more detail as regards operation of the valve herein described, said valve normally is in the "closed" configuration (i.e. in a condition according to which the closure element 5 is in a closed position and therefore the fluid cannot circulate from the delivery port 3 to the discharge port 4); in this configuration the closure element 5 is in its closed position and physically separates the delivery port 3 from the discharge port 4 and simultaneously the slider element 8 is in its operating condition (thereby preventing passage of fluid between the back pressure chamber 7 and discharge port 4 and consequently propagation of the pressure signal present at the back pressure chamber 7 towards the discharge port 4).

By operating on the actuating unit 6, the closure element 8 moves to its second operating condition; in this way connection between the back pressure chamber 7 and discharge port 4 is opened and consequently, in the back pressure chamber 7 a depressurization takes place. Under the combined action of the pressure of the fluid impinging on the opposite face of the closure element 5 and the negative pressure induced by the discharge port 4, said closure element 5 is submitted to such a force that it is brought to an open position (so that a fluid flow through valve 1 can start).

Bringing the slider element 8 back to its first operating condition, the starting conditions are restored in the back pressure chamber 7 and consequently the valve goes back to the "closed" configuration.

For correct operation of valve 1 in accordance with the present invention, the pressure value detectable at the discharge pipe (with which the discharge port 4 of valve 1 is interlocked in the assembled condition) is required to be transmitted to the back pressure chamber 7; therefore within the present invention the hydraulic/pneumatic connection between the back pressure chamber 7 and the discharge port 4 can also be of the indirect type, provided the intercommunication duct/s and discharge port 4 open on the same pipe of the appliance in which valve 1 is mounted. Actually, this is exactly the embodiment shown in Figs. 1 and 2 where the secondary intercommunication duct 11 opens into the same region (of the discharge pipe) where the discharge port 4 opens; obviously, if required, a duct can be arranged inside the valve body 2 which is adapted to bring the secondary intercommunication duct 11 (or, more generally, the back pressure chamber 7) into communication with the discharge port 4.

Advantageously, valve 1 in accordance with the present invention further comprises sealing means 12 which is intended to be engaged between the valve body 2 and a corresponding housing seat 13a (which in turn will be formed in a sanitary appliance such as a tap or the like).

To fixedly secure valve 1 to the housing seat 13a, fastening means 13 is provided which is formed in the valve body 2 and designed to engage valve 1 in the housing seat 13a; conveniently, this fastening means 13 can be of any type provided it meets given requirements in terms of mounting and mechanical tightness.

According to a preferred embodiment of the present invention, the fastening means 13 comprises a screw thread formed on the side wall 2b of the valve body 2 and substantially coaxial with the longitudinal axis 2a of the valve body 2; conveniently, this screw thread will mesh with a corresponding screw thread formed in the housing seat 13a.

Advantageously, the sealing means 12 comprises at least one main sealing element 12a which is positioned in a manner substantially perpendicular to the longitudinal axis 2a of the valve body 2; in the preferred embodiments of the present invention (shown in the accompanying drawings), this main sealing element 12a is such disposed that it is coaxial and concentric with either the delivery port 3 or the discharge port 4 (i.e. practically with that port which is coaxial with the longitudinal axis 2a of the valve body 2).

By virtue of the presence of both the screw thread formed on the side wall 2b of the valve body 2 and the main sealing element 12a, tightness to fluid leakages between the valve body 2 and housing seat 13a is advantageously maximized; in fact, during positioning of valve 1 in the housing seat 13a, by acting on said thread the main sealing element 12a is efficiently compressed and it constitutes a barrier against fluid leakages. (It is to be noted that practically this main sealing element 12a lies in a plane perpendicular to the longitudinal axis 2a and by screwing down valve 1 in the housing seat 13a a mechanical pressure is created exactly in this ideal plane perpendicular to axis 2a and containing the sealing element 12a).

In addition to the main sealing element 12a, also provided in valve 1 is at least one secondary sealing element 12b which is disposed at the side wall 2b and is designed to be interposed between said wall and the housing seat 13a; this secondary sealing element 12b too (as shown in Figs. 1 and 3) can be such arranged that it takes advantage of the mechanical pressure created by screwing down of valve 1 in the housing seat 13a. (In other words, the secondary sealing element 12b too can be advantageously disposed in an ideal plane perpendicular to the longitudinal axis 2a).

Conveniently, a third sealing element 12c is also present and it is placed in the drive chamber 9 and designed to inhibit fluid passage between said chamber and the surrounding atmosphere.

In a more detailed description of the different construction elements of valve 1, it is first to be noted that the closure element 5 comprises a peripheral portion 5a made of an elastically deformable material (an elastomer material such as a synthetic or natural rubber, for example).

This peripheral portion 5a which broadly has the shape of an annulus, has one edge (and more specifically the edge with a greater diameter) connected to the valve body 2 and is conceived in such a manner that it is subjected to elastic deformation during movement of the closure element 5 between the closed and open positions.

Internally of the peripheral portion 5a there is a central portion 5b that, on the contrary, can be made of a substantially non deformable material (and it is conveniently linked to the peripheral portion 5a); this central portion 5b moves in a rigid and integral manner with the peripheral portion 5a and practically is not deformed even by the pressure effects acting on its opposite faces. It will be also appreciated that, at least in the embodiments shown in Figs. 1 and 3, the peripheral portion 5a has a face acting as a sealing element between the delivery port 3 and discharge port 4, thereby carrying out separation of the two ports in the "closed valve" configuration.

Advantageously, in the central portion 5b of the closure element 5 a primary intercommunication orifice 5c can be formed the function of which is to bring either the delivery port 3 (as shown in Fig. 1) or the discharge port 4 (as shown in Fig. 3) into communication with the back pressure chamber 7.

It is to be noted that in the case of a valve of the type shown in Fig. 3 it is also possible to arrange a secondary intercommunication orifice 5d formed in the perimetral portion 5a, which is designed to bring the delivery port 3 into communication with the back pressure chamber 7; in this way by a very simple architecture and easy construction, it is possible to carry out the hydraulic or pneumatic connections between the back pressure chamber 7 and delivery port 3 without the inner structure of the valve body 2 becoming too much complicated (i.e. without the necessity of inner ducts having complex courses).

Through a more detailed analysis of the valve body 2 it is possible to see that it first of all comprises a bush 14 which is positioned close to a first end of the valve body 2 (at the delivery 3 and discharge 4 ports); an intermediate block 15 is connected with bush 14 and in turn it internally holds the back pressure chamber 7, main intercommunication duct 10 and secondary intercommunication duct 11. Finally, a fastening plate 16 is present and it is connected to the intermediate block 15 (at its end opposite to the first end) and is designed to carry out removable engagement of the actuating unit 6 with the valve body 2.

Advantageously, the intermediate block 15 comprises interconnecting means operatively interposed between the block and bush 14 to mutually secure them; in order to assure easy assembling and disassembling (for inspection, cleaning or replacement of pieces, for example) engagement between the bush 14 and intermediate block 15 will be of the removable type. In more detail, the interconnecting means comprises one or more elastic teeth emerging from the intermediate block 15 and engaging bush 14; alternatively, or in addition to the above, depending on the tenacity degree that is wished to be imparted to the connection between the mentioned pieces, one or more elastic teeth may be present on bush 14 and emerge therefrom for engagement with the intermediate block 15. Obviously, connection between the bush 14 and intermediate block 15 may take place through a variety of known hooking devices, provided preference is given to couplings of the removable type.

In order to retain possible solid particles carried by the fluid flow, valve 1 further comprises a filtering body 17 operatively active upstream of the delivery port 3 and/or downstream of the discharge port 4; this filtering element 17 which can be a metal-mesh filter for example, can be advantageously fastened in a removable manner to the valve body 2 so as to promote possible dismantling for servicing and/or replacement.

With reference now to the actuating unit 6, it can be made by exploiting any typology of mechanical actuation; therefore said unit can operate manually or in an automated manner (by appropriate arrangement of hydraulic, pneumatic or electric actuators).

According to a preferred embodiment of the invention, the actuating unit 6 comprises an element adapted to be magnetically excited, which can be a monostable or a bistable electromagnet. This element to be magnetically excited is concerned with passage of a predetermined current intensity, so as to induce a magnetic field moving the slider element 8 and bringing it to its operating conditions.

Advantageously, connection between the actuating unit 6 and valve body 2 is of a removable type as well, so as to ensure easy replacement of possibly damaged components or indifferently adapt the valve in accordance with the invention to a monostable electromagnet or a bistable electromagnet.

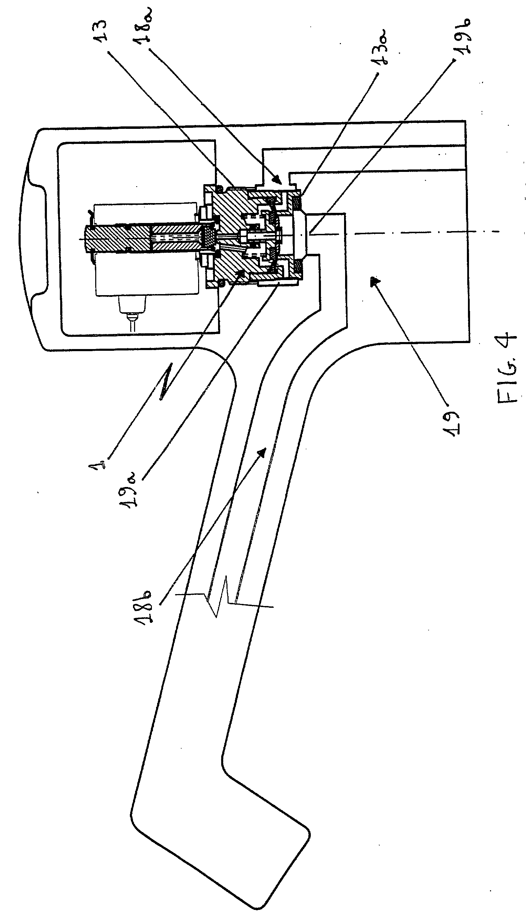

It is also part of the present invention a sanitary appliance (of the type usually found in domestic sinks or public lavatories); this appliance comprises a main body 18 (which may consist of ceramic or metal facilities) and at least one fluid-dispensing device 19 (more usually a tap, as already shown in Figs. 1 and 4) at least partly incorporated in the main body 18.

In turn, the fluid-dispensing device 19 comprises at least one delivery pipe 18a and one discharge pipe 18b which are mutually connected and a valve 1 (that obviously will bring them into mutual communication only in the "open" configuration) of the type hitherto described.

It will be recognized that valve 1 can be housed within the fluid-dispensing device 19 or also at the inside of appliance 18, provided the appropriate structural and/or operating arrangements to ensure correct operation of the assembly are observed.

Conveniently, appliance 18 (or the fluid-dispensing device 19 as shown in the accompanying figures, for example) has a housing seat 13a the shape of which matches that of valve 1 at least partly.

Depending on the type of valve used, also present close to the housing seat 13a is an inflow portion 19a and an outflow portion 19b that practically are those pipe portions of appliance 18 that are designed to open into valve 1.

In more detail, by use of a valve substantially similar to that shown in Fig. 1, the inflow portion 19a of the delivery pipe 18a (that will be placed close to the delivery port 3) will have a substantially cylindrical conformation, as shown in Fig. 2; at the same time, the outflow portion 19b of the discharge pipe 18b placed at the discharge port 4 will advantageously have a substantially toroidal conformation.

If on the contrary a valve substantially similar to that shown in Fig. 3 is wished to be adopted, the inflow portion 19a of the delivery pipe 18a will have a substantially toroidal conformation, whereas the outflow portion 19b of the discharge pipe 18b will have a substantially cylindrical conformation.

The invention achieves important advantages.

In fact, first of all, it should be noted that due to the particular arrangement concerning the fluid delivery and discharge ports, the conformation and course of the sanitary-appliance pipes can be greatly simplified; in addition, a very efficient coupling in terms of operation can be created between the valve and the appliance (at least as regards tightness against leakages) without a perfect alignment of the valve axis with the axis of one or more pipes being required.

Furthermore, it is to be pointed out that the valve of the invention has a very simple inner structure enabling the general working principle of the indirect-operation valves to be exploited without the structural and manufacture complications present in valves of known type.

In addition, the general structure of the inventive valve allows easy handling during installation, even when not very skilled operators are concerned, which advantageously makes its use more convenient and causes a reduction in the laying times.

Furthermore, the present invention enables the characteristics of the elastic seals to be exploited in an optimal manner because said seals are such disposed that they work on surfaces that can be efficiently pressed against each other during fastening of the valve to the respective housing seat.

A further advantage of the invention resides in that all construction components of the valve can be disassembled in an easy and quick manner, and consequently a longer duration of life can be ensured to the valve (because servicing is made easier and damaged or worn out pieces can be replaced more easily).

The present invention also has a non negligible flexibility in operation, particularly in view of the fact that a direct or indirect operation can be indifferently selected and, depending on requirements, it is possible to adopt either a monostable or a bistable magnet.

## Claims

1. A valve comprising:
- a valve body (2) substantially consisting of a prismatic body extending along a longitudinal axis (2a) and having a side wall (2b);
- a delivery port (3) formed in the valve body (2);
- a discharge port (4) formed in the valve body (2) and hydraulically and/or pneumatically connectable to said delivery port (3);
- a closure element (5) movably engaged in the valve body (2) and movable in a reversible manner at least between a closed position at which it inhibits passage of fluid between the delivery port (3) and said discharge port (4) and an open position at which it allows said passage of fluid between the delivery port (3) and discharge port (4);
- an actuating unit (6) connected to the valve body (2) and operatively active at least on the closure element (5) to move it at least between the closed position and open position;
**characterized in that** the delivery port (3) and discharge port (4) are oriented in directions transverse, and preferably perpendicular, to each other.

2. A valve as claimed in claim 1, **characterized in that** the delivery port (3) is oriented parallel to, and preferably coaxial with the longitudinal axis (2a) of the valve body (2), the discharge port (4) being formed in said side wall (2b) of the valve body (2) and being oriented perpendicular to the delivery port (3), the discharge port (4) further comprising a given number of radial openings.

3. A valve as claimed in claim 1, **characterized in that** the discharge port (4) is oriented parallel to, and preferably coaxial with, the longitudinal axis (2a) of the valve body (2), the delivery port (3) being formed in said side wall (2b) of the valve body (2) and being oriented perpendicular to the discharge port (4), the delivery port (3) further comprising a given number of radial openings.

4. A valve as claimed in anyone of the preceding claims, **characterized in that** it further comprises:
- at least one back pressure chamber (7) formed at least partly within the valve body (2) and adapted to be brought into fluid communication at least with the delivery port (3) and/or the discharge port (4); and
- a slider element (8) operatively active on said back pressure chamber (7) and susceptible of being moved by said actuating unit (6) at least between a first operating condition in which it inhibits a fluid communication between the discharge port (4) and the back pressure chamber (7) and a second operating condition in which it allows said fluid communication between the discharge port (4) and the back pressure chamber (7), the closure element (5) moving to the open position at the second operating condition of the slider element (8).

5. A valve as claimed in claim 4, **characterized in that** it further comprises:
- a drive chamber (9) formed at least partly within the valve body (2) and housing the slider element (8);
- a main intercommunication duct (10) connecting the back pressure chamber (7) with said drive chamber (9); and
- a secondary intercommunication duct (11) connecting the drive chamber (9) with the discharge port (4).

6. A valve as claimed in anyone of the preceding claims, **characterized in that** it further comprises sealing means (12) designed to be engaged between the valve body (2) and a housing seat (13a).

7. A valve as claimed in claim 6, **characterized in that** said sealing means (12) comprises at least one main sealing element (12a) disposed in a manner substantially perpendicular to the longitudinal axis (2a) of the valve body (2), said main sealing element (12a) being preferably coaxial and concentric with the delivery port (3) or the discharge port (4) which is coaxial with the longitudinal axis (2a) of the valve body (2).

8. A valve as claimed in claim 6, **characterized in that** the sealing means (12) comprises at least one secondary sealing element (12b) disposed at the side wall (2b) and designed to be interposed between said wall and the housing seat (13a).

9. A valve as claimed in claim 6, **characterized in that** the sealing means (12) comprises at least one third sealing element (12c) disposed in the drive chamber (9).

10. A valve as claimed in anyone of the preceding claims, **characterized in that** it comprises fastening means (13) formed on the valve body (2) and designed to engage the valve (1) in the housing seat (13a).

11. A valve as claimed in claim 10, **characterized in that** said fastening means (13) comprises at least one screw thread formed on the side wall (2b) of the valve body (2) and substantially coaxial with the longitudinal axis (2a) of the valve body (2).

12. A valve as claimed in anyone of the preceding claims, **characterized in that** the closure element (5) comprises:
- an elastically deformable peripheral portion (5a) having an edge connected to the valve body (2), said peripheral portion (5a) becoming elastically deformed during movement of the closure element (5) between the closed position and open position; and
- a central portion (5b) made of a substantially non deformable material and linked to the peripheral portion (5a).

13. A valve as claimed in claim 12, **characterized in that** the closure element (5) comprises a primary intercommunication orifice (5c) formed in said central portion (5b) and designed to bring the delivery port (3) or discharge port (4) into communication with the back pressure chamber (7).

14. A valve as claimed in claims 3 and 12, **characterized in that** it further comprises a secondary intercommunication orifice (5d) formed in the perimetral portion (5a) of the closure element (5), said secondary intercommunication orifice (5d) being designed to bring the delivery port (3) into communication with the back pressure chamber (7).

15. A valve as claimed in anyone of the preceding claims, **characterized in that** the valve body (2) comprises:
- a bush (14) positioned close to a first end of the valve body (2) at the delivery and discharge ports (3, 4);
- an intermediate block (15) connected to said bush (14), said intermediate block comprising the back pressure chamber (7), main intercommunication duct (10) and secondary intercommunication duct (11) at the inside thereof; and
- a plate (16) connected to said intermediate block (15) at a second end opposite to said first end and designed to removably fasten the actuating unit (6) to the valve body (2).

16. A valve as claimed in claim 15, **characterized in that** the intermediate block (15) comprises interconnecting means operatively interposed between the intermediate block and bush (14) to secure them to each other, said union preferably being of the removable type.

17. A valve as claimed in claim 16, **characterized in that** said interconnecting means comprises at least one elastic tooth emerging from the intermediate block (15) and engaging the bush (14) and/or an elastic tooth emerging from the bush (14) and engaging the intermediate block (15).

18. A valve as claimed in anyone of the preceding claims, **characterized in that** it further comprises a filtering body (17) operatively active upstream of the delivery port (3) and/or downstream of the discharge port (4), said filtering body (17) being preferably connected to the valve body (2) in a removable manner.

19. A valve as claimed in anyone of the preceding claims, **characterized in that** the actuating unit (6) comprises an element susceptible of being magnetically excited, said element subjected to magnetic excitation preferably being a monostable or bistable electromagnet.

20. A sanitary appliance, comprising a main body (18) and at least one fluid-dispensing device (19) incorporated in said main body (18) at least partly, said fluid-dispensing device (19) comprising at least one delivery pipe (18a) and one discharge pipe (18b) connected to each other, and one valve (1), preferably of the type as claimed in anyone of the preceding claims, operatively interposed between said delivery pipe (18a) and discharge pipe (18b).

21. An appliance as claimed in claim 20, **characterized in that** it further comprises:
- a housing seat (13a) the shape of which matches that of the valve (1) at least partly;
- an inflow portion (19a) of the delivery pipe (18a) placed close to the delivery port (3) and having a substantially cylindrical conformation; and
- an outflow portion (19b) of the discharge pipe (18b) placed close to the discharge port (4) and having a substantially toroidal conformation.

22. An appliance as claimed in claims 3 and 20, **characterized in that** it further comprises:
- a housing seat (13a) the shape of which matches that of the valve (1) at least partly;
- an inflow portion (19a) of the delivery pipe (18a) placed close to the delivery duct (3) and having a substantially toroidal conformation; and
- an outflow portion (19b) of the discharge pipe (18b) placed close to the discharge port (4) and having a substantially cylindrical conformation.

23. A valve comprising:
- a valve body (2) substantially consisting of a prismatic body extending along a longitudinal axis (2a) and having a side wall (2b) substantially parallel to said longitudinal axis (2a);
- a delivery port (3) formed in the valve body (2);
- a discharge port (4) formed in the valve body (2) and hydraulically and/or pneumatically connectable to said delivery port (3), the delivery port (3) being oriented coaxial with the longitudinal axis (2a) of the valve body (2), the discharge port (4) being formed in said side wall (2b) of the valve body (2) and being oriented perpendicular to the delivery port (3), the discharge port (4) further comprising a given number of radial openings;
- a closure element (5) movably engaged in the valve body (2) and movable in a reversible manner at least between a closed position at which it inhibits passage of fluid between the delivery port (3) and said discharge port (4) and an open position at which it enables said passage of fluid between the delivery port (3) and discharge port (4);
- an actuating unit (6) comprising a bistable electromagnet, said actuating unit (6) being connected to the valve body (2) and operatively active at least on the closure element (5) to move it at least between the closed position and the open position;
- at least one back pressure chamber (7) formed at least partly within the valve body (2) and adapted to be brought into fluid communication at least with the delivery port (3) and/or the discharge port (4);
- a slider element (8) operatively active on said back pressure chamber (7) and shiftable by said actuating unit (6) at least between a first operating condition in which it inhibits a fluid communication between the discharge port (4) and the back pressure chamber (7) and a second operating condition in which it allows said fluid communication between the discharge port (4) and the back pressure chamber (7), the closure element (5) moving to the open position at the second operating condition of the slider element (8);
- a drive chamber (9) formed at least partly within the valve body (2) and housing the slider element (8);
- a main intercommunication duct (10) connecting the back pressure chamber (7) to said drive chamber (9);
- a secondary intercommunication duct (11) connecting the drive chamber (9) to the discharge port (4); and
- a screw thread formed on the side wall (2b) of the valve body (2) and substantially coaxial with the longitudinal axis (2a) of the valve body (2).

24. A valve comprising:
- a valve body (2) substantially consisting of a prismatic body extending along a longitudinal axis (2a) and having a side wall (2b) substantially parallel to said longitudinal axis (2a);
- a delivery port (3) formed in the valve body (2);
- a discharge port (4) formed in the valve body (2) and hydraulically and/or pneumatically connectable to said delivery port (3), the discharge port (4) being oriented coaxial with the longitudinal axis (2a) of the valve body (2), the delivery port (3) being formed in said side wall (2b) of the valve body (2) and being oriented perpendicular to the discharge port (4), the delivery port (3) further comprising a given number of radial openings;
- a closure element (5) movably engaged in the valve body (2) and movable in a reversible manner at least between a closed position at which it inhibits passage of fluid between the delivery port (3) and said discharge port (4) and an open position at which it enables said passage of fluid between the delivery port (3) and discharge port (4);
- an actuating unit (6) comprising a bistable electromagnet, said actuating unit (6) being connected to the valve body (2) and operatively active at least on the closure element (5) to move it at least between the closed position and the open position;
- a back pressure chamber (7) formed at least partly within the valve body (2) and adapted to be brought into fluid communication at least with the delivery port (3) and/or the discharge port (4);
- a slider element (8) operatively active on said back pressure chamber (7) and shiftable by said actuating unit (6) at least between a first operating condition in which it inhibits a fluid communication between the discharge port (4) and the back pressure chamber (7) and a second operating condition in which it allows said fluid communication between the discharge port (4) and the back pressure chamber (7), the closure element (5) moving to the open position at the second operating condition of the slider element (8);
- a drive chamber (9) formed at least partly within the valve body (2) and housing the slider element (8);
- a main intercommunication duct (10) connecting the back pressure chamber (7) to said drive chamber (9);
- a secondary intercommunication duct (11) connecting the drive chamber (9) to the discharge port (4); and
- a screw thread formed on the side wall (2b) of the valve body (2) and substantially coaxial with the longitudinal axis (2a) of the valve body (2).
